Europäisches Patentamt

European Patent Office

Office européen des brevets

(19)

(11) Numéro de publication : **0 346 197 B1**

(12)

# FASCICULE DE BREVET EUROPEEN

(45) Date de publication du fascicule du brevet :
**19.08.92 Bulletin 92/34**

(51) Int. Cl.⁵ : **C03B 23/033,** C03B 27/04

(21) Numéro de dépôt : **89401534.6**

(22) Date de dépôt : **05.06.89**

(54) **Récuperation et trempe simultanée de plaques de verre.**

(30) Priorité : **07.06.88 FR 8807532**

(43) Date de publication de la demande :
**13.12.89 Bulletin 89/50**

(45) Mention de la délivrance du brevet :
**19.08.92 Bulletin 92/34**

(84) Etats contractants désignés :
**AT BE CH DE ES FR GB IT LI LU NL SE**

(56) Documents cités :
**EP-A- 0 133 114
EP-A- 0 263 030
FR-A- 2 442 219
US-A- 4 123 246**

(73) Titulaire : **SAINT-GOBAIN VITRAGE
INTERNATIONAL
18, avenue d'Alsace
F-92400 Courbevoie (FR)**

(72) Inventeur : **Letemps, Bernard
5, avenue du Gros Buisson
F-60150 Thourotte (FR)**
Inventeur : **Leclercq, Jacques
34, rue de Cambrai
F-80240 Roisel (FR)**
Inventeur : **Dereims, Philippe
19, rue des Domeliers
F-60200 Compiègne (FR)**

(74) Mandataire : **Menes, Catherine et al
SAINT-GOBAIN RECHERCHE 39, Quai Lucien
Lefranc
F-93300 Aubervilliers (FR)**

## Description

La présente invention concerne le bombage de plaques de verre et éventuellement également leur trempe et elle se rapporte plus particulièrement à une technique de bombage et éventuellement de trempe dans laquelle lesdites plaques de verre sont bombées en étant transportées sur un convoyeur dont les organes de support des plaques de verre sont disposés le long d'une trajectoire courbe.

Cette technique de bombage, éventuellement prolongée par une trempe thermique est plus particulièrement décrite dans les demandes de brevets français 2 442 219 et 2 549 465 et dans la demande de brevet européen 263 030. Dans ces documents, on décrit des convoyeurs à rouleaux rectilignes dont les paliers sont disposés le long d'une trajectoire courbe, descendante ou de préférence montante, aptes à conférer aux plaques de verre portées à leur température de bombage et donc déformables sous l'effet de la gravité, une courbure simple c'est-à-dire suivant une seule direction, ou encore cylindrique, lorsqu'elles défilent sur ces convoyeurs. On décrit également des convoyeurs à rouleaux ou tiges cintrées, dont les paliers sont, comme précédemment, disposés le long d'une trajectoire courbe, constituant ainsi pour les plaques de verre chauffées à température de bombage qui y circulent, un lit de conformation à double courbure, à la fois courbure dans la direction de circulation des plaques de verre du fait de la disposition des rouleaux ou tiges cintrées suivant la trajectoire courbe, et courbure transversale dans la direction perpendiculaire à la direction de circulation, du fait de la forme cintrée des rouleaux ou tiges.

Le document de brevet FR-A-2 549 465 déjà cité, propose aussi une récupération des plaques de verre à l'extrémité haute du dispositif de bombage et de trempe à profil courbe dans la direction de progression des plaques de verre. Cette récupération est effectuée par un système à basculement dans lequel s'engage chaque plaque de verre à la fin de l'opération de bombage et de trempe, ce système basculant sous l'effet du porte-à-faux créé par le poids de la plaque de verre et déposant ladite plaque sur un transporteur qui n'a plus l'orientation inclinée fortement redressée de la fin du dispositif de bombage et de trempe, mais une orientation différente, sensiblement horizontale si désiré. Après avoir basculé chaque plaque de verre sur le transporteur d'évacuation, le système basculant libéré du porte-à-faux créé par la plaque de verre, revient par basculement en sens inverse, à sa position initiale en attente de la plaque de verre suivante.

Ce système basculant donne satisfaction, cependant il sert uniquement au basculement des plaques de verre et le temps consacré à sa traversée par lesdites plaques est considéré comme un temps mort, autrement dit un temps pendant lequel l'état des plaques de verre, c'est-à-dire le bombage, la trempe, n'évolue pas.

La présente invention vise à améliorer le rendement de cette installation de bombage-trempe en supprimant le temps mort évoqué précédemment.

Elle propose pour cela un procédé de récupération des plaques de verre dans une installation de bombage et de trempe comprenant un lit de conformation à profil courbe dans la direction de progression des plaques de verre, dans lequel les plaques de verre, vers l'extrémité aval de cette installation, changent de direction, notamment en étant engagées dans un système à basculement et en étant basculées par ce système jusqu'à une orientation différente de celle qu'elles avaient avant d'être prises en charge par ce système de basculement, ce procédé étant tel que les plaques de verre pendant leur changement de direction et notamment pendant leur passage dans le système à basculement, sont soumises au soufflage d'un gaz qui concourt à leur trempe.

Avantageusement, ce procédé est tel qu'après abandon d'une plaque de verre par le système à basculement, ledit système est amené en position pour la réception d'une nouvelle plaque de verre, soit sans rotation complémentaire, soit par une rotation d'un angle réduit, inférieur à l'angle dont doit tourner ledit système pour faire basculer une plaque de verre.

L'invention propose également un dispositif comme il est indiqué dans la revendication 4, dans lequel des moyens de soufflage de gaz sont prévus au niveau du basculement, en vue de concourir à la trempe des plaques de verre.

Avantageusement ces moyens de soufflage sont embarqués sur un système réalisant le basculement des plaques de verre.

Ainsi dans une installation de bombage et de trempe de plaques de verre donnée du type précité, la longueur pendant laquelle les plaques de verre sont soumises à un soufflage de gaz de refroidissement est plus importante et il en résulte une possibilité de faire défiler les plaques de verre plus vite, ou de raccourcir la longueur réservée à la trempe sur le lit courbe, d'où une amélioration du rendement de l'installation.

En outre, dans le système basculant tel que décrit dans FR-A-2 549 465, le temps de basculement en sens inverse pour revenir en position de réception d'une nouvelle plaque de verre est aussi gênant essentiellement parce qu'il limite la cadence de cette technique de bombage-trempe. En effet, selon cette technique, les plaques de verre pourraient se succéder à cadence plus élevée, pratiquement sans intervalle entre elles, s'il n'y avait pas la nécessité d'attendre le retour en position de réception du système basculant.

La présente invention vise également à supprimer cette limitation à la cadence introduite par le système à basculement pour la récupération des plaques de verre en sortie de l'installation de bombage-trempe de façon à pouvoir profiter sans restriction des aptitudes de cette technique de bombage-trempe de plaques de verre sur un lit de conformation à profil courbe selon la direction de progression des plaques de verre.

Avantageusement, le système à basculement selon l'invention, équipé de moyens de soufflage, est en outre constitué de façon à posséder une pluralité de positions de réception des plaques de verre nouvelles, ce qui réduit l'angle de rotation pour venir en position de réception après le transfert d'une plaque de verre, ce qui en conséquence réduit le temps d'amenée en position de réception.

La seule adjonction de moyens de soufflage au niveau du système à basculement permet d'améliorer la cadence de défilement des plaques de verre d'environ 10 à 25%, et en outre la multiplication des positions de réception des plaques de verre nouvelles augmente encore la cadence sensiblement dans les mêmes proportions.

L'invention sera maintenant décrite plus en détail en référence aux figures jointes qui représentent :

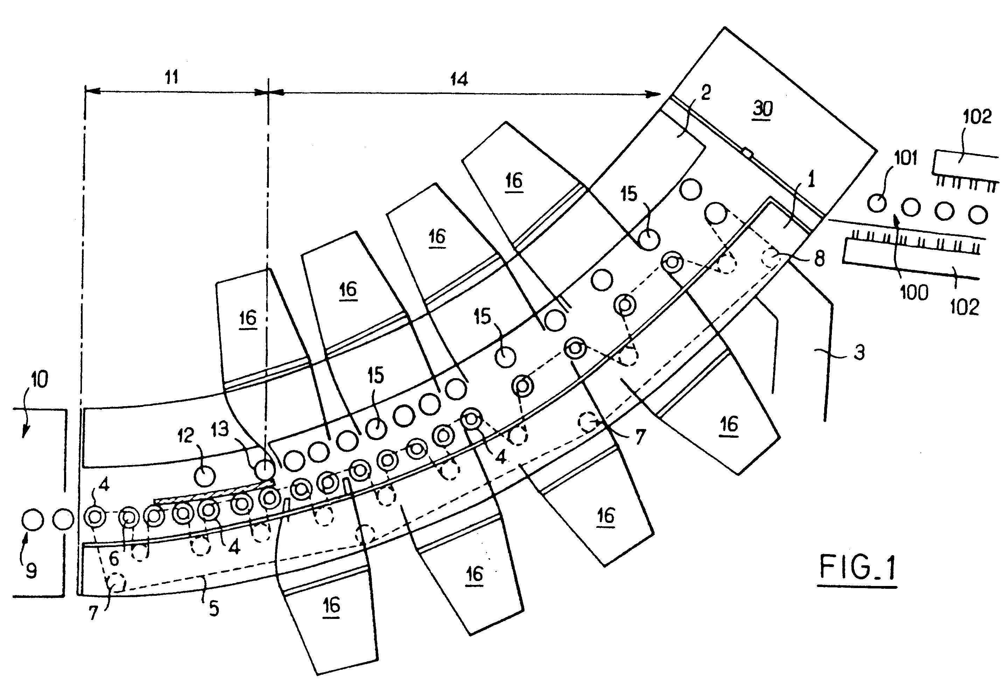

. figure 1 : le schéma général d'une installation de bombage et de trempe pour laquelle un système de basculement selon l'invention est prévu,

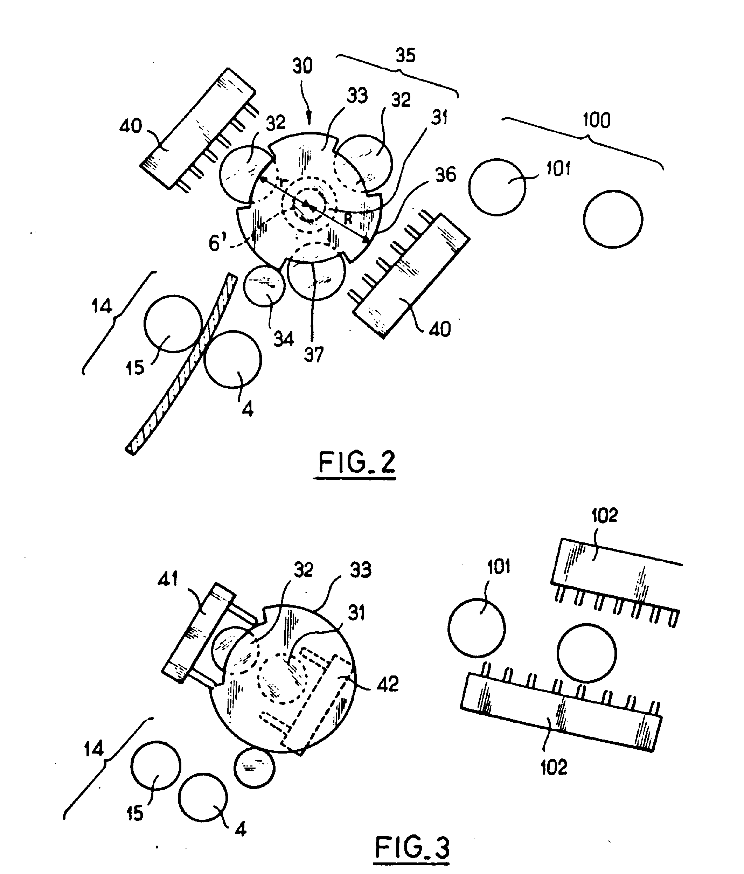

. figure 2 : un système à basculement selon l'invention associé à des moyens de soufflage,

. figure 3 : un système à basculement selon l'invention sur lequel sont embarqués des moyens de soufflage,

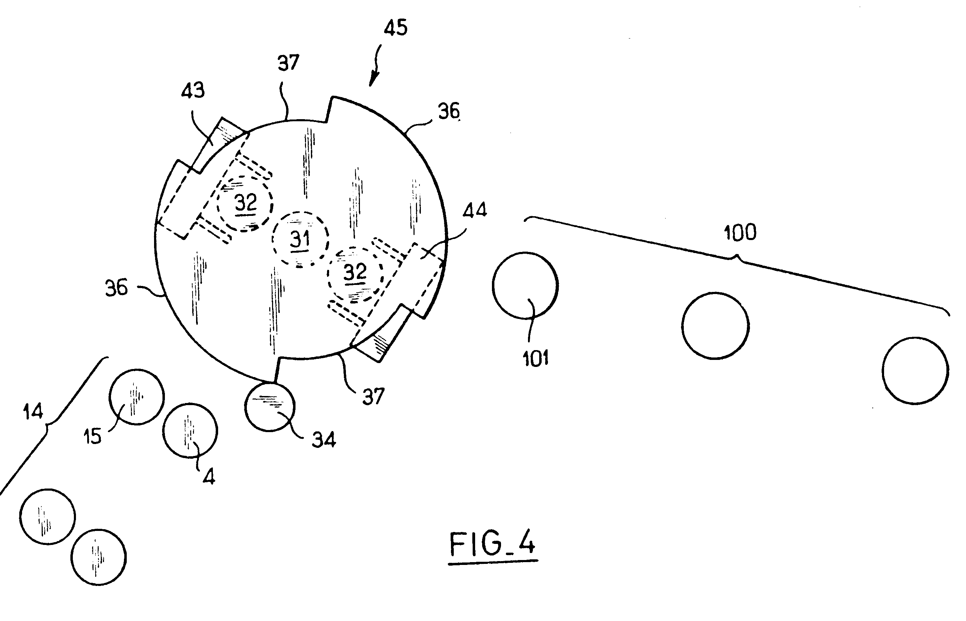

. figure 4 : un système à basculement selon la figure 3 modifié en outre pour présenter une pluralité de positions de réception des plaques de verre,

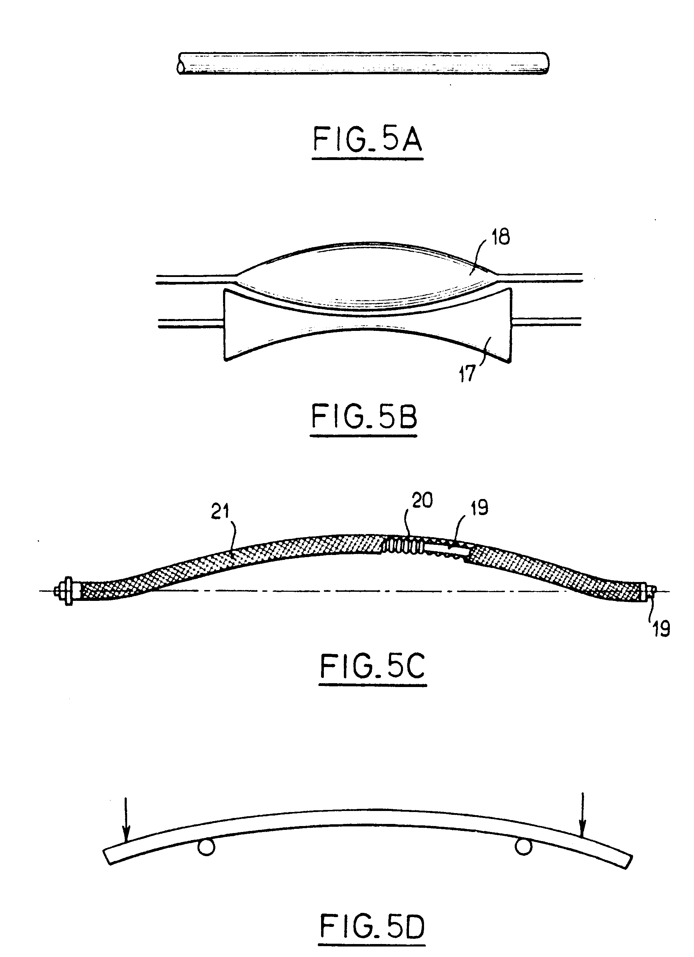

. figure 5 : un schéma illustrant les différents organes supports pouvant équiper l'installation de bombage-trempe et le basculeur selon l'invention :

– 5A : des rouleaux rectilignes,
– 5C : des tiges cintrées,
– 5B : des rouleaux type "diabolo/fuseau",
– 5D : des rouleaux "contrefléchis".

Une vue schématique de la figure 1 montre une installation de bombage et de trempe de plaques de verre pour laquelle des systèmes de basculement selon l'invention sont prévus.

Elle possède deux éléments de châssis 1 et 2, un élément inférieur 1 et un élément supérieur 2, courbés dans la direction de leur longueur et portés par un bâti 3.

L'élément inférieur 1 est équipé d'organes 4 supportant le verre tels des rouleaux droits disposés parallèlement les uns aux autres dans la largeur dudit élément, mis en rotation sur eux-mêmes par exemple par l'intermédiaire d'une chaine 5 agissant sur des pignons 6 disposés en extrémité des rouleaux, maintenue tendue à l'aide de pignons tendeurs et de rappel 7, entrainée à partir d'un arbre moteur 8. Les organes 4, en particulier les rouleaux droits disposés les uns à la suite des autres, déterminent un lit de conformation pour les plaques de verre, à profil courbe, faisant suite à un convoyeur 9 d'amenée des plaques de verre qui traverse un four de réchauffage du verre. De préférence, le lit de conformation ainsi constitué est tangent au convoyeur 9 de façon à proposer aux plaques de verre un chemin continu, régulier, sans à-coup, cassure ou sursaut.

L'élément supérieur 2 est équipé, au moins dans certaines parties, de moyens de maintien supérieurs des plaques de verre tels que 15. Avantageusement, comme représenté sur la figure 1, de tels moyens 15 n'existent pas dans une première zone 11 où s'effectue le bombage ; peuvent éventuellement exister dans la zone 11 des moyens tels que 12 très espacés par rapport aux organes inférieurs 4 n'intervenant qu'à titre de sécurité, de façon que des plaques de verre défilant sur les organes inférieurs 4, dans la mesure où elles s'affaissent normalement sur le lit de conformation et en épousent la forme, ne les touchent pas. Puis en limite de la zone de bombage 11, juste avant une seconde zone, la zone de trempe 14, le châssis 2 est équipé d'un moyens 13 d'aide à l'avancement des plaques de verre faisant également barrière à la pénétration de l'air de trempe dans la zone de bombage. Cet organe est, par exemple, dans la mesure où les organes inférieurs 4 sont des rouleaux rectilignes, un rouleau du même type, disposé pour être en contact avec la face supérieure des plaques de verre, en regard du rouleau inférieur 4 à l'extrémité aval de la zone de bombage 11, entrainé à la même vitesse que les rouleaux inférieurs 4.

Dans la zone de trempe 14, qui fait immédiatement suite à la zone de bombage 11, sont disposés des organes supports 4, des moyens de maintien supérieurs 15, en contact avec le verre et en appui sur lui, ces organes 4 et ces moyens 15 étant de même nature que les organes 4 de la zone 11, à savoir des rouleaux rectilignes si des rouleaux rectilignes constituaient les organes 4 de la zone 11. Dans cette zone 14, sont également disposées des buses de soufflage 16 destinées à souffler un gaz de refroidissement, en général de l'air, sur le verre en vue de le tremper. Ces buses 16 sont disposées de façon à souffler le gaz de refroidissement à la fois sur la face inférieure et la face supérieure du verre.

L'évacuation des plaques de verre à l'extrémité de la partie d'installation décrite précédemment est réalisée par un système à bascule 30, objet de la présente invention et détaillé dans ses diverses variantes sur les figures jointes.

Ce système 30 délivre les plaques de verre à un transporteur 100 ayant une orientation différente de celle de l'installation immédiatement en amont du système 30. Plus précisément, immédiatement avant le système 30, les plaques de verre sont dans une position inclinée, parfois fortement inclinée, et de préférence le transporteur 100 a une position horizontale ou sensiblement horizontale.

Dans la mesure où les organes supports 4 des zones de bombage 11 et de trempe 14 sont des rouleaux rectilignes, le transporteur 100 est constitué lui aussi de rouleaux rectilignes 101 ou d'éléments équivalents (galets, coussins gazeux, etc...).

Une installation du même type peut être prévue pour conférer aux plaques de verre, en plus de leur courbure dans la direction de leur défilement, une courbure dans la direction transversale. Dans ce cas les organes supports 4, les moyens de maintien 15, les moyens 12 et 13 sont modifiés en conséquence. Il s'agira par exemple de rouleaux du type "diabolo" 17 ou "fuseau" 18 (figure 5B), c'est-à-dire non cylindriques mais ayant au contraire des formes profilées, organes inférieurs 4 et moyens supérieurs 15, 13 et éventuellement 12, ayant alors des formes complémentaires.

Il pourra s'agir également de tiges ou rouleaux cintrés, ayant (comme montré figure 5C) une âme centrale rigide 19 cintrée, recouverte d'une gaine tubulaire annelée 20 rigide en rotation mais déformable axialement, elle-même recouverte d'une protection 21 en fils de verre ou de silice tressés ou tricotés. Ces tiges ou rouleaux cintrés sont plus précisément décrits dans les documents de brevets français 1 476 785, 92 074, 2 129 919, 2 144 523, 2 189 330.

Il pourra s'agir également de rouleaux cintrés d'un autre type, par exemple des rouleaux rectilignes au repos mais cintrés par l'effet d'une contrainte exercée sur leurs extrémités, ces rouleaux sont généralement dits "contrefléchis" et sont illustrés sur la figure 5D.

Pour que la figure 5 constitue un inventaire des différents organes de support ou de maintien du verre utilisables, un rouleau rectiligne a été ajouté en vue 5A.

Le transporteur 100 est adapté lui aussi au type de courbure des plaques de verre à transporter et ses éléments supportant les plaques de verre seront du même type que ceux installés dans les zones 11 et 14 de bombage et de trempe.

Le système basculeur 30 est, par exemple, du type montré sur les figures 2, 3 et 4.

Ces figures 2, 3 et 4 montrent toutes le dernier couple de moyens de maintien supérieurs 15 et d'organes support 4 immédiatement en amont, c'est-à-dire à l'extrémité de la zone 14 de trempe, et les premiers éléments support 101 du transporteur 100 horizontal ou sensiblement horizontal.

Comme déjà dit ces moyens 15, organes 4 ou éléments 101 peuvent être, suivant le type de courbure désirée pour les plaques de verre, des rouleaux rectilignes ou des rouleaux cintrés, des rouleaux contrefléchis, des rouleaux profilés, etc...,.

Pour simplifier la description du système à bascule 30, nous prendrons l'exemple d'une installation de bombage-trempe destinée à produire des plaques de verre n'ayant qu'une courbure simple étant entendu que l'invention n'est pas limitée à cette seule installation, mais qu'elle s'adresse aussi aux installations permettant de produire des plaques de verre à courbure double encore appelée complexe.

Le système basculeur (montré sur les figures 2, 3 et 4) globalement référencé 30, est constitué essentiellement d'un organe support central 31 (et dans la description simplifiée que nous faisons d'un rouleau support central 31), d'au moins un rouleau de maintien 32), espacés de l'organe 31 de façon à permettre l'engagement d'une plaque de verre entre les deux, et il est associé à des moyens pouvant l'entrainer en rotation pour l'amener après un basculement, en position de réception d'une nouvelle plaque de verre.

L'organe support central 31 tourne indépendamment du système basculeur 30, à la même vitesse que les organes supports 4 des zones 11 et 14 précédentes. Avantageusement la chaine 5 qui entraine ces organes des zones 11 et 14 engrène également sur un pignon 6' situé en extrémité de l'organe support central 31.

Ces moyens d'entraînement peuvent être comme décrits dans le document de brevet français 2 549 465 déjà cité, constitués d'un système à contrepoids. Un tel système n'est pas représenté sur les figures de la présente demande.

L'ensemble 31, 32 peut aussi être associé à au moins une came 33. Il constitue alors un barillet globalement référencé 35, apte à tourner autour de l'axe du rouleau support 31, indépendamment de ce rouleau support 31.

L'entrainement en rotation de l'ensemble du système 35 est alors obtenu comme montré sur les figures 2, 3 et 4 grâce à la came 33 solidaire de l'organe support 31 et du (ou des) moyen (s) de maintien associé (s) 32, et grâce également à au moins un galet 34 d'entraînement de la came 33, par exemple mu par la chaine 5 qui entraine les rouleaux supports 4 ou par une chaine supplémentaire entraînée par le même arbre moteur 8 ou par un autre arbre moteur indépendant.

Le barillet 35 doit être entraîné en rotation pour venir en position de réception d'une nouvelle plaque de verre, le reste du temps il est fixe. Cette périodicité d'entraînement, dans une forme de réalisation simple, est obtenue par le fait que la came 33 présente un contour ayant des zones dites "actives" 36 aptes, lorsqu'elles sont en coïncidence avec le galet 34, à être en contact avec lui, ce qui se traduit par un entrainement en rotation du barillet 35 et des zones dites "inactives" 37 qui, même lorsqu'elles sont en regard du galet 34 ne sont pas en contact avec lui, ce qui fait que le barillet 35 à ces instants là n'est pas entrainé. De façon pratique, la came 33 est un disque globalement circulaire disposé en extrémité des rouleaux 31 et 32, perpendiculairement à eux, les zones actives 36 sont constituées par des portions de circonférence à rayon R et les zones inactives sont constituées par des portions de circonférence à rayon r inférieur à R, ce qui constitue sur le disque de la came 33 des séries de créneaux ou échancrures.

Les parties actives 36 et les parties inactives ou échancrures 37 sont organisées de façon que le barillet 35 soit entrainé en rotation depuis la position qu'il a après avoir basculé une plaque de verre sur le convoyeur 100, jusqu'à une nouvelle position dans laquelle le rouleau support central 31 et un rouleau de maintien 32 qui lui est associé dans le barillet 35, sont prêts à recevoir une nouvelle plaque de verre à l'extrémité du lit de conformation à profil courbe.

La surface du galet 34 et/ou de la came 33 est en une matière du type caoutchouc qui favorise l'entrainement de la came 33 du fait du simple contact.

Eventuellement, le galet 34 peut être équipé d'un embrayage à limiteur de couple, c'est-à-dire d'un système assurant son immobilité lorsque la résistance à la rotation dépasse une valeur déterminée. Ainsi lorsque le galet 34 est en appui sur un début de partie active, mais que la plaque de verre déjà en appui sur le convoyeur d'évacuation 100 n'est pas encore totalement dégagée du couple de rouleaux support 31, de maintien 32, la rotation du barillet 35 est bloquée ; à ce moment l'embrayage à limiteur de couple intervient.

Pour éviter l'emploi d'un embrayage à limiteur de couple, on peut prévoir des rampes inclinées pour passer d'une zone inactive 37 à une zone active 36, permettant l'attaque progressive du galet 34 et son patinage tant que la résistance à la rotation existe.

D'autres moyens pouvant entrainer périodiquement le barillet 35 en rotation sont possibles. Ainsi le galet 34 peut être équipé de son moteur ou, plus généralement, de son moyen d'entrainement, mis en fonctionnement seulement périodiquement ; dans ce cas les découpes de la came en portions actives 36 et inactives 37 sont inutiles. Ainsi encore le barillet peut posséder son propre moteur, mis en fonctionnement périodiquement.

Selon l'invention un soufflage de gaz, en général de l'air est prévu au niveau du système à basculement 30 pour concourir à la trempe des plaques de verre qui traversent ledit système 30.

Comme montré figure 2, il peut s'agir d'un ou plusieurs caisson (s) ou d'une ou plusieurs rampe (s) de soufflage 40 disposé (s) de façon fixe en regard du basculeur 30 apte à souffler en direction des plaques de verre, pendant qu'elles y progressent, avant d'être basculées. Ces rampes ou caissons 40 sont situé(e)s d'un ou de préférence des deux côtés du basculeur 30 de façon à affecter de préférence les deux faces des plaques de verre.

Suivant une autre forme de réalisation illustrée par la figure 3, les moyens de soufflage sont embarqués sur le basculeur 30 et suivent les plaques de verre dans leur mouvement de basculement.

Ainsi des caissons de soufflage 41, 42 sont disposés, au-delà des rouleaux 31 et 32 de façon à souffler approximativement perpendiculairement au plan des plaques de verre sur les faces des plaques de verre qui traversent le système 30, supportées et maintenues par les rouleaux 31 et 32, et ils sont montés sur le barillet 35 et tournent avec lui.

Avantageusement en regard du convoyeur 100 des moyens de soufflage 102 sont également prévus pour également concourir à la trempe des plaques de verre. Ces moyens 102 peuvent être disposés soit au dessus, soit en dessous du convoyeur 100, mais de préférence ils existent à la fois sur le dessus et le dessous du convoyeur 100 de façon à attaquer les deux faces des plaques de verre.

Avantageusement, le soufflage dirigé vers le haut, situé sous le convoyeur 100 peut même être utilisé pour amortir l'accostage des plaques de verre sur ledit convoyeur.

Dans une autre forme de réalisation illustrée par la figure 4, pour obtenir le meilleur rendement de l'installation en racourcissant le temps d'amenée en position de réception du barillet, on prévoit sur un barillet plusieurs positions de réception de nouvelles plaques de verre. Ainsi, l'angle de rotation du barillet est plus faible que dans le cas d'une seule position de réception, ce qui entraîne un gain de temps et ce qui permet de faire suivre les plaques de verre dans l'installation avec des intervalles plus petits.

Dans la figure 4, la construction représentée comporte deux rouleaux de maintien 32, disposés symétriquement par rapport au rouleau support central 31 et la came 33 comporte deux parties actives 36 séparées par deux parties inactives 37.

Comme précédemment les rouleaux de maintien 32 sont montés de façon à présenter vis-à-vis du rouleau support central 31 un écart déterminé, correspondant à l'épaisseur des plaques de verre à traiter et réglable pour s'adapter aux différentes épaisseurs de verre possibles.

Des constructions avec plus de deux rouleaux de maintien 32 sont également possibles.

Dans la mesure où les organes de soufflage situés au niveau du basculeur 30 ne sont pas portés par le basculeur mais sont au contraire fixes portés par le bâti général de l'installation, on peut avoir 3, 4 ou plus rouleaux de maintien par barillet.

Cependant lorsque les moyens de soufflage sont embarqués sur le barillet, on se limite souvent à seulement deux rouleaux de maintien 32 comme illustré, pour éviter un encombrement excessif.

Dans ce cas, des caissons de soufflage 43, 44 par exemple équipés de buses tubulaires sont prévus à la périphérie du barillet référencé 45, parallèlement aux rouleaux 31 et 32, de préférence symétriquement par rapport au rouleau central 31, disposés comme montré sur la figure 4, de façon à souffler sur les plaques de verre pendant leur traversée du basculeur suivant une direction approximativement perpendiculaire à leurs faces.

Comme précédemment des moyens de soufflage peuvent avantageusement équiper le convoyeur 100.

En outre des moyens de soufflage peuvent être embarqués sur le basculeur et simultanément d'autres moyens de soufflage peuvent être fixes.

Ces dispositifs fonctionnent comme décrit ci-après.

Quand une plaque de verre à l'extrémité de la zone 14 est prise en charge par le basculeur 30, elle s'insère entre le rouleau support central 31 et le ou un rouleau de maintien 32 qui lui fait face et progresse entre eux.

Pendant ce temps les moyens de soufflage, soit fixes et extérieurs au basculeur, soit embarqués sur le basculeur soufflent et assurent ainsi une continuité du traitement de trempe du verre. Lorsque la plaque de verre a suffisamment progressé dans le basculeur et que son bord arrière est libéré du couple de rouleaux fixes 4, 15 de la zone 14, le barillet peut basculer dès que le porte-à-faux créé par le poids du verre est suffisamment important.

Lorsque les moyens de soufflage sont embarqués sur le barillet, le soufflage se continue même pendant le basculement.

Dans les cas où les moyens de soufflage ne sont pas embarqués, le soufflage est moins ressenti par la plaque de verre dès qu'elle bascule. Mais étant donné que ce temps de basculement est réduit comparé à tout le temps pendant lequel la plaque de verre a progressé dans le basculeur avant le basculement, une quasi continuité de soufflage est établie. Ensuite en accostant sur le convoyeur 100 le soufflage se fait à nouveau sentir si ledit convoyeur est équipé de moyens de soufflage. Le basculeur libéré de la plaque de verre tourne pour venir réceptionner une nouvelle plaque de verre. Si ce basculeur est équipé d'une came 33 avec parties actives et inactives alternées, pendant l'engagement de la plaque de verre entre les rouleaux 31 et 32 et pendant le basculement, le galet d'entraînement 34 est en regard d'une portion inactive 37 en retrait par rapport à lui, au début de cette partie avant basculement, en fin de cette partie à la fin du basculement. Le basculement se terminant, le galet d'entraînement 34 accoste sur une partie active 36, il entraîne alors la came 33 et la fait tourner tant que dure la partie active.

Parties actives et parties inactives sont déterminées pour que le barillet soit non entraîné pendant l'engagement du verre dans le basculeur, et pendant le basculement, entraîné le reste du temps.

Dans la mesure où plusieurs rouleaux de maintien 32 sont prévus sur le barillet, ledit barillet tourne de l'angle le plus faible possible pour qu'une nouvelle position de réception soit retrouvée.

**Revendications**

1. Procédé de récupération des plaques de verre dans une installation de bombage et de trempe (11, 14) comprenant un lit de conformation (4) à profil courbe dans la direction de progression des plaques de verre, dans lequel les plaques de verre, vers l'extrémité aval de cette installation changent de direction, notamment en étant engagées dans un système à basculement et en étant basculées par ce système jusqu'à une orientation différente de celle qu'elles avaient avant d'être prises en charge par ce système de basculement (30), **caractérisé en ce que** pendant leur changement de direction et notamment pendant leur passage dans le système de basculement (30), les plaques de verre sont soumises au soufflage d'un gaz qui concourt à leur trempe.

2. Procédé selon la revendication 1, **caractérisé en ce que** les plaques de verre sont soumises au soufflage pendant leur engagement dans le système à basculement (30) et pendant le basculement lui-même, des moyens de soufflage (41, 42) étant embarqués sur le système à basculement (30).

3. Procédé selon l'une des revendications précédentes, **caractérisé en ce que** le système à basculement (30), qui est pourvu de multiples positions de réception des feuilles de verre, est amené après avoir abandonné une plaque de verre dans une position de réception de la plaque de verre suivante, soit sans rotation complémentaire, soit par rotation suivant un angle réduit, inférieur à l'angle dont doit tourner ledit système pour permettre la récupération d'une plaque de verre après basculement.

4. Dispositif de récupération de plaques de verre par basculement dans une installation de bombage et de trempe (11, 14) comprenant un lit de conformation (4) à profil courbe dans la direction de progression des plaques de verre, disposé du côté de l'extrémité aval de cette installation, en amont d'un convoyeur (100) d'évacuation, **caractérisé en ce que** des moyens de soufflage (40, 41, 42, 43, 44) de gaz sont prévus au niveau du basculement, en vue de concourir à la trempe des plaques de verre.

5. Dispositif selon la revendication 4, **caractérisé en ce que** des moyens de soufflage (40) sont fixes, portés par le châssis général de l'installation.

6. Dispositif selon l'une des revendications 4 ou 5, **caractérisé en ce que** des moyens de soufflage sont embarqués (41, 42, 43, 44) sur un système (35, 45) réalisant le basculement des plaques de verre.

7. Dispositif selon l'une des revendications 4 à 6, **caractérisé en ce qu'**il possède un organe support (31) des plaques de verre, dans le prolongement des organes (4) supportant les plaques de verre, par des moyens (31, 32) permettant la présence dans le système de basculement (30) de multiples positions de réception des feuilles de verre immédiatement en amont, faisant partie d'un barillet (35) tournant autour du même axe que cet organe support (31), indépendamment de lui, ce barillet comprenant en outre une pluralité de moyens équivalents de maintien des plaques de verre sur leur face supérieure, répartis autour de l'organe support (31) pour maintenir et supporter chaque plaque de verre au cours de son basculement, **et en ce qu**'il possède également des moyens (33, 34) destinés à entraîner le barillet (35) en rotation.

8. Dispositif selon la revendication 7, **caractérisé en ce qu**'il possède deux moyens de maintien (32) disposés symétriquement par rapport à l'organe support (31) central, les moyens de soufflage (43, 44) étant constitués essentiellement par deux caissons ou des rampes embarqués sur le système basculeur (30), disposés symétriquement, à la périphérie des moyens de maintien (32), orientés pour souffler sur les faces des plaques de verre alors qu'elles sont engagées entre l'organe support central (31) et l'un des moyens de maintien (32) associé.

9. Dispositif selon l'une des revendications 4 à 8, **caractérisé en ce qu**'il possède des moyens de soufflage (102) associés au convoyeur d'évacuation (100),

## Patentansprüche

1. Verfahren zur Aufnahme von Glasscheiben in einer Anlage zum Biegen und Vorspannen (11,14) mit einem Formgebungsbett (4) mit in Fortbewegungsrichtung der Glasscheiben gekrümmtem Profil, in dem die Glasscheiben zum hinteren Ende dieser Anlage hin die Richtung wechseln, insbesondere indem sie in ein Schwenksystem aufgenommen und durch dieses System verschwenkt werden, und zwar bis zu einer Ausrichtung, die sich von derjenigen, die sie vor der Aufnahme durch das Schwenksystem (30) hatten, unterscheidet, **dadurch gekennzeichnet, daß** die Glasscheiben während des Richtungswechsels und insbesondere während des Durchlaufs im Schwenksystem (30) mit einem Gas zum Zwecke der Vorspannung beblasen werden.

2. Verfahren nach Anspruch 1, **dadurch gekennzeichnet, daß** die Glasscheiben während der Aufnahme in das Schwenksystem (30) und während des Schwenkens selbst mittels einer Blaseinrichtung (41, 42), die an dem Schwenksystem angeordnet ist, beblasen werden.

3. Verfahren nach einem der vorhergehenden Ansprüche, **dadurch gekennzeichnet, daß** das Schwenksystem (30), das eine Anzahl von Positionen zur Aufnahme der Glasscheiben aufweist, nach dem Abgeben einer Glasscheibe in eine Position zur Aufnahme der nächsten Glasscheibe gebracht wird, und zwar entweder ohne entsprechende Drehung oder durch eine Drehung um einen reduzierten Winkel, der kleiner ist als der Winkel, um den sich das System drehen muß, um die Aufnahme einer Glasscheibe nach dem Schwenken zu ermöglichen.

4. Vorrichtung zur Wiederaufnahme von Glasscheiben durch Schwenken in einer Anlage zum Biegen und Vorspannen (11, 14) mit einem Formgebungsbett (4) mit in Fortbewegungsrichtung der Glasscheiben gekrümmtem Profil, die am hinteren Ende dieser Anlage vor einem Abtransportförderer (100) angeordnet ist, **dadurch gekennzeichnet, daß** auf Schwenkniveau Gasblaseinrichtungen (40, 41, 42, 43, 44) vorgesehen sind, um zur Vorspannung der Glasscheiben beizutragen.

5. Vorrichtung nach Anspruch 4, **dadurch gekennzeichnet, daß** die Blaseinrichtungen (40) stationär sind und vom Grundgestell der Anlage getragen sind.

6. Vorrichtung nach einem der Ansprüche 4 oder 5, **dadurch gekennzeichnet, daß** die Blaseinrichtungen (41, 42, 43, 44) auf einem System (35, 45) zur Durchführung des Schwenkens der Glasscheiben angebracht sind.

7. Vorrichtung nach einem der Ansprüche 4 bis 6, **dadurch gekennzeichnet, daß** sie in Verlängerung von die Glasscheiben tragenden Elementen (4) ein Stützelement (31) für die Glasplatten besitzt und Einrichtungen (31, 32) aufweist, die im Schwenksystem (30) viele Aufnahmepositionen für die ankommenden Glasscheiben ermöglichen und Teil eines walzenartigen Elements (35) bilden, die sich unabhängig von diesem Stützelement (31) um die gleiche Achse wie dieses dreht, wobei die walzenartige Element außerdem eine Vielzahl äquivalenter Einrichtungen zum Halten der Glasscheiben auf deren Oberseite aufweist, welche zum Halten und Stützen der jeweiligen Glasscheibe während des Schwenkens um das Stützelement (31) herum angeordnet sind, **und daß** sie weiterhin Einrichtungen (33, 34) für den Drehantrieb des Elements (35) aufweist.

8. Vorrichtung nach Anspruch 7, **dadurch gekennzeichnet, daß** sie zwei Halteeinrichtungen (32) besitzt, die symmetrisch zu dem zentralen Stützelement (31) angeordnet sind, wobei die Blaseinrichtungen (43, 44) im wesentlichen aus zwei Kästen oder aus Rampen gebildet sind, die über dem Schwenkssystem (30) gelagert, am Umfang der Halteeinrichtung (32) symmetrisch angeordnet und so ausgerichtet sind, daß sie auf die Oberflächen der Glasscheiben blasen, wenn diese zwischen dem zentralen Stützelement (31) und einer der zugehörigen Halteeinrichtungen (32) aufgenommen sind.

9. Vorrichtung nach einem der Ansprüche 4 bis 8, **dadurch gekennzeichnet, daß** sie mit dem Abtransportförderer (100) verbundene Blaseinrichtungen (102) aufweist.

## Claims

1. Method of recovering glass plates from a curving and toughening installation (11, 14) comprising a shaping bed (4) having a profile curved in the direction of travel of the glass plates, in which the glass plates, towards the downstream end of this installation, change direction notably by being engaged into a tilting system and by being tilted by this system into an orientation different from that which they had before being taken over by this tilting system (30), **characterized in that**, during their change in direction and notably during their passage through the tilting system (30), the glass plates are subjected to the blowing of a gas which participates in their toughening.

2. Method according to Claim 1, **characterized in that** the glass plates are subjected to the blowing during their engagement into the tilting system (30) and during the tilting itself, blowing means (41, 42) being mounted on the tilting system (30).

3. Method according to one of the preceding Claims, **characterized in that** the tilting system (30), which is provided with multiple positions for receiving the glass sheets, is brought, after having abandoned a glass plate, into a position for receiving the next glass plate, either without complementary rotation or by rotation through a reduced angle, less than the angle through which said system must rotate to permit the recovery of a glass plate after tilting.

4. Device for recovering glass plates by tilting in a curving and toughening installation (11, 14) comprising a shaping bed (4) having a profile curved in the direction of travel of the glass plates, the device being disposed at the downstream end of this installation and upstream of a discharge conveyor (100), **characterized in that** blowing means (40, 41, 42, 43, 44) for gas are provided at the tilting position, for the purpose of participating in the toughening of the glass plates.

5. Device according to Claim 4, **characterized in that** blowing means (40) are fixed, carried by the general frame of the installation.

6. Device according to one of Claims 4 or 5, **characterized in that** blowing means are mounted (41, 42, 43, 44) on a system (35, 45) performing the tilting of the glass plates.

7. Device according to one of Claims 4 to 6, **characterized in that** it possesses a support element (31) for the glass plates, in the continuation of the elements (4) supporting the glass plates, by means (31, 32) making possible the presence in the tilting system (30) of multiple reception positions for the glass plates immediately upstream, forming part of a barrel (35) revolving about the same axis as this support element (31) and independently of it, this barrel comprising, in addition, a plurality of equivalent means for holding the glass plates on their upper surface, distributed around the support element (31) for holding and supporting each glass plate during its tilting, and in that it possesses also means (33, 34) intended for driving the barrel (35) in rotation.

8. Device according to Claim 7, **characterized in that** it possesses two holding means (32) disposed symmetrically with respect to the central support element (31), the blowing means (43, 44) being constituted essentially of two chests or nozzle assemblies mounted on the tilting system (30) and disposed symmetrically, at the periphery of the holding means (32), orientated for blowing onto the faces of the glass plates while they are engaged between the central support element (31) and one of the associated holding means (32).

9. Device according to one of Claims 4 to 8, **characterized in that** it possesses blowing means (102) associated with the discharge conveyor (100).

FIG.1

EP 0 346 197 B1

FIG. 2

FIG. 3

FIG_4

FIG.5A

FIG.5B

FIG.5C

FIG.5D